# EUROPÄISCHE PATENTANMELDUNG

(11) **EP 4 597 215 A1**
(43) Veröffentlichungstag der Anmeldung: **06.08.2025**
(21) Anmeldenummer: 25152219.9
(22) Anmeldetag: 16.01.2025
(51) Int. Cl.: G02F 1/21, H04B 10/532, H04B 10/548, H04B 10/70, H04L 9/08, G02F 1/225

(54) **VERFAHREN UND VORRICHTUNG ZUR POLARISATIONSMODULATION VON ELEKTROMAGNETISCHEN WELLEN**

(30) Priorität: 30.01.2024 DE 102024102524; 20.06.2024 DE 102024117388
(71) Anmelder: OHB SE, 28359 Bremen (DE)
(72) Erfinder: Gohle, Christoph, 81247 München (DE)
(74) Vertreter: Hoener, Matthias

(57) **Zusammenfassung**

Die Erfindung schafft ein Verfahren sowie eine Vorrichtung zur Polarisationsmodulation von elektromagnetischen Wellen. Dabei ist es vorgesehen, dass zur Polarisationsmodulation von elektromagnetischen Wellen, insbesondere zur Erzeugung von Schlüsseln zur Quantenkryptographie, zwei gegenläufige, polarisierte elektromagnetische Wellen, nämlich ein erster Wellenzug (19) und ein zweiter Wellenzug (20), durch mindestens ein zu einer der beiden elektromagnetischen Wellen kopropagierendes RF-Feld eines *running wave* Phasenmodulators (16) bzw. eines Laufwellenphasenmodulators, relativ zueinander phasenmoduliert werden.

## Beschreibung

Moderne Quantencomputerkryptographie verwendet unter anderem die Technik des Quantenschlüsselaustausches. Als Quantenschlüsselaustausch werden Verfahren bezeichnet, die sich quantenmechanische Prozesse zu eigen machen, um zwei miteinander kommunizierende Parteien eine gemeinsame Zufallszahl zur Verfügung zu stellen. Diese Zufallszahl oder auch Zufallsinformation wird als geheimer Schlüssel (oder als *private key*) verwendet, um mittels konventionellen, d. h. klassischen symmetrischen Verschlüsselungsverfahren Nachrichten abgesichert zu übertragen. Als Schlüsselelement für den Quantenschlüsselaustausch werden Phasen- bzw. Polarisationsmodulatoren mit einem sehr guten Extinktionsverhältnis von besser als 20 dB benötigt. Die Technologie des Quantenschlüsselaustausches wird zukünftig eine wesentliche Rolle in der kryptographischen Kommunikation in verschiedensten Bereichen spielen. Insbesondere versprechen satellitengestützte Infrastrukturen diese Technologie über größere Distanzen als bei terrestrischen / glasfaserbasierten Netzwerken anzuwenden

Es existieren verschiedene Möglichkeiten, solche Phasen- bzw. Polarisationsmodulatoren, auch Hochkontrast-Modulatoren genannt, zu realisieren. So ist es beispielsweise bekannt, eine aktive optische Modulation mit einem elektro-optischen Modulator, der auf einem photonischen Chip integriert sein kann, mit einem geeigneten interferometrischen Aufbau zu realisieren. Die bekannteste Topologie für derartige Wellenleiteroptiken ist die Mach-Zehnder-Topologie, die sowohl Phasen-, Polarisationsals auch Amplitudenmodulation ermöglicht. Die Mach-Zehnder-Topologie zeichnet sich dadurch aus, dass sie in ihrem Aufbau einfach und vielseitig einsetzbar ist und eine geringe Einfüge- und Rückflussdämpfung aufweist. Mach-Zehnder-Interferometer sind jedoch auch dafür bekannt, dass sie instabil und daher defektanfällig in anspruchsvolle Umgebungsbedingungen sind (Wärme, Strahlung und Mechanik). Bei Telekommunikationsanwendungen, bei denen Auslöschungsverhältnisse von 10 dB in der Regel ausreichen, ist dies weniger problematisch. Wenn jedoch ein hohes Extinktionsverhältnis von mehr als 20 dB erreicht werden soll, wird dies zu einem größeren Problem. Um ein so hohes Extinktionsverhältnis zu erreichen, müssen außerdem die von den Modulatoren induzierten optischen Phasen über die gesamte Dauer des optischen Pulses um wesentlich weniger als 10% eines optischen Zyklus variieren. Dies kann entweder dadurch erreicht werden, dass die optischen Pulse kurz sind oder die Bandbreitenanforderungen an die Modulatoren erhöht werden.

Ein bekannter Modulator, der entwickelt wurde, um dieses Problem zu lösen, basiert auf einem Sagnac-Interferometer. Derartige Interferonmeter sind besonders robust gegenüber interferometrischen Instabilitäten, da die beiden Interferometerarme einen gemeinsamen optischen Weg aufweisen und lediglich die Ausbreitungsrichtung der Lichtwellen bzw. Lichtpulse invertiert ist. Ein derartiger Modulator ist beispielsweise in WO 2021/078723 A1 beschrieben. Bei dieser Art von Interferonmeter wird die Phasendifferenz zwischen dem vorwärts- und dem rückwärtslaufenden Arm der Sagnac-Schleife dadurch erzeugt, dass der Modulator asymmetrisch in der Schleife angeordnet wird, so dass der vorwärtslaufende Lichtpuls den Modulator zu einem anderen Zeitpunkt durchläuft als der rückwärtslaufende Puls.

Der Vorteil dieses Verfahrens der Modulation im Vergleich zu einer Mach-Zehnder-Geometrie besteht darin, dass die Lichtpulse, die sich in den beiden Armen ausbreiten, denselben geometrischen Weg durchlaufen, so dass die Interferometerphase von Natur aus stabil gegenüber Umgebungsstörungen, sowohl in der Sagnac-Schleife als auch im elektrooptischen Modulator, ist. In der bekannten Form bietet der Modulator sowohl die Möglichkeit der Phasen- als auch der Polarisationsmodulation. Allerdings weist dieser Modulator aufgrund der Sagnac-Topologie auch einige Einschränkungen auf, nämlich eine erhöhte Komplexität sowie eine erhöhte Einfüge- und Rückflussdämpfung, die sich durch die erhöhte Komplexität ergibt.

Aufgrund des verwendeten Modulationsschemas muss die Dauer bzw. die Länge des Lichtpulses viel kürzer sein als die Länge der Sagnac-Schleife, um vorwärts und rückwärts laufende Pulse sauber trennen zu können. Um den gewünschten Effekt zu erzielen, muss das HF-Modulationssignal außerdem in der Lage sein, auf einen optischen Pulszug mit mindestens der doppelten Pulsfrequenz des ursprünglichen Pulszugs zu wirken. Dies stellt höhere Anforderungen an die Leistung des Modulators und setzt einen gepulsten Betrieb des optischen Signals voraus.

Optische Modulatoren, die auf Sagnac-Interferometern basieren, sind dafür bekannt, dass sie eine robuste Leistung in Bezug auf die interferometrische Stabilität aufweisen. Anstatt wie beschrieben, die Zeitverzögerung zwischen vorwärts und rückwärts laufender Welle zu nutzen ist es ebenfalls möglich direkt die Propagationsrichtung des optischen Feldes nutzbar zu machen, in dem man einen sogenannten elektrooptischen Laufwellenmodulator zum Einsatz bringt. In einem solchen Laufwellenmodulator breitet sich das modulierende HF-Signal entlang des optischen Wellenleiters des Modulators mit der gleichen Geschwindigkeit aus wie das optische Signal im Wellenleiter. Auf diese Weise erfährt das optische Signal, das sich gemeinsam mit dem HF-Signal ausbreitet, einen konstanten Brechungsindex, der durch die Amplitude des HF-Signals zu dem Zeitpunkt gegeben ist, zu dem das optische Signal in den Modulator eintritt. Ein sich gegenläufig ausbreitendes Signal erfährt einen zeitabhängigen Brechungsindex mit der gleichen Zeitabhängigkeit wie das HF-Signal, jedoch mit der doppelten Geschwindigkeit.

Das bedeutet, dass wenn das Modulationssignal harmonisch (oder zumindest ausgeglichen) ist und die Dauer aufweist, die der gegenläufige Puls benötigt, um das elektro-optische Medium zu durchlaufen, die Netto-Phasenverschiebung des gegenläufigen Pulses in einem linearen Regime gleich Null ist, während die Phasenverschiebung des mitläufigen Pulses endlich ist.

Bei bekannten Modulatoren wird bei einer Modulationsfrequenz von 1,5 GHz eine Unterdrückung der Rückwärtsantwort im Vergleich zur Vorwärtsantwort um mehr als 20 dB erreicht; und das selbst bei beliebigen Pulsformen mit einer Bandbreite von bis zu 20 GHz. Bei Modulationsfrequenzen über 1,5 GHz ist die Unterdrückung der Modulationsantwort für jede Signalfrequenz besser als 10 dB für das rückwärtsgerichtete Signal im Vergleich zum vorwärtsgerichteten Signal. Im Allgemeinen ist die Antwort für vorwärts- und rückwärtslaufende Felder bei konstanten (DC) Modulationssignalen gleich. Da der Unterschied in der Antwort zwischen Vorwärts- und Rückwärtsrichtung zeitunabhängig ist, gibt es keine Anforderungen an die Zeitstruktur des optischen Signals, es können sogar kontinuierliche Signale moduliert werden.

Der Vorteil des so konstruierten Modulators in einer Sagnac-Geometrie besteht darin, dass die geometrische Phase zwischen der linken und der rechten laufenden Welle nur durch den Unterschied in der Phasenverschiebung der sich vorwärts und rückwärts ausbreitenden Welle bestimmt wird. Daher agiert ein solcher Modulator als Hochpassfilter für Indexmodulationen in der Sagnacschleife mit einer Stopbandkante bei etwa 1/Laufzeit. Auf diese Weise werden die meisten niederfrequenten Effekte, wie z. B. Vorspannungsdrift aufgrund von Alterung oder thermischer Belastung, beseitigt und es können auf stabile Weise sehr hohe Extinktionsverhältnisse erreicht werden.

Da vorwärts- und rückwärtslaufende Felder allein aufgrund der Ausbreitungsrichtung unterschiedlich moduliert werden, müssen keine Annahmen über eine zeitliche Struktur des optischen Signals getroffen werden. Der Modulator kann sowohl mit kontinuierlichen optischen Signalen als auch mit gepulsten Signalen verwendet werden. Das HF-Modulationssignal kann mit der Zeitstruktur des optischen Signals synchronisiert werden, muss es aber nicht.

Bei den bekannten Verfahren besteht das Problem, Polarisationsmodulationen mit einem hohem Auslöschungsverhältnis von > 20 dB bei einer erhöhten Modulationsfrequenz zu erreichen, um die oben beschriebenen Anwendungen verlässlich einzusetzen.

Davon ausgehend liegt der Erfindung die Aufgabe zugrunde, ein Verfahren sowie eine Vorrichtung zur Polarisationsmodulation von elektromagnetischen Wellen zu schaffen, durch welche die vorgeschriebenen Probleme gelöst werden.

Eine Lösung dieser Aufgabe wird durch die Maßnahmen des Anspruchs 1 beschrieben. Demnach ist es vorgesehen, dass zur Polarisationsmodulation von elektromagnetischen Wellen, insbesondere zur Erzeugung von Schlüsseln zur Quantenkryptographie, zwei gegenläufige, polarisierte elektromagnetische Wellen, nämlich ein erster Wellenzug und ein zweiter Wellenzug, durch mindestens ein zu einer der beiden elektromagnetischen Wellen ko-propagierendes RF-Feld eines *running wave* Phasenmodulators bzw. eines Laufwellenphasenmodulators, relativ zueinander phasenmoduliert werden. Dadurch kann im Vergleich zu den bekannten Verfahren die Symbolrate um mindestens einen Faktor zwei verbessert werden. Außerdem kann ebenfalls im Vergleich zu den bisherigen Verfahren, die für eine gegebene Symbolrate erforderliche Modulationsbandbreite, um mindestens einen Faktor zwei reduziert werden. Die hier beschriebene Erfindung kombiniert die Vorteile der im Stand der Technik beschriebenen Polarisationsmodulation mit den Vorteilen eines Designs, das auf Laufwellenmodulatoren basiert und beseitigt die vorgeschriebenen Nachteile und Einschränkungen der bisherigen Technik. Das wird unter anderem auch dadurch realisiert, dass die Länge der Sagnac-Schleife auf eine minimale Länge reduziert wird, die zum Einfügen des Modulators erforderlich ist. Außerdem wird der von den bekannten Verfahren bekannte Modulator ersetzt durch einen Laufwellenmodulator von geeigneter Länge, um die angestrebte Modulationsfrequenz zu unterstützen. Durch das beschriebene Verfahren kann ein hohes Extinktionsverhältnis von mehr als 20 dB erreicht werden und zwar über die gesamte Lebensdauer. Außerdem weist der Modulator eine hohe Robustheit gegenüber äußeren Einflüssen wie z. B. Wärme, Strahlung und Vibrationen auf.

Der hier beschriebene Modulator weist eine Bandbreite auf, die mit der Pulsfolgefrequenz vergleichbar ist. Das führt dazu, dass die Elektronik und die elektrooptischen Komponenten vereinfacht werden. Außerdem ist es durch den Modulator möglich, bei einer gegebenen elektrooptischen Auslegung mit mindestens der doppelten Symbolrate zu arbeiten. Bei gleicher Symbolrate und gleichem elektronischen Design kann die optische Pulsdauer doppelt so lang sein, wie bei bisherigen Verfahren. Dadurch kann eine ausreichend homogene Polarisation im gesamten resultierenden optischen Puls erreicht werden.

Insbesondere sieht es die Erfindung vor, dass die elektromagnetischen Wellen, insbesondere mehrere Pulse oder kontinuierliche Wellenzüge, mittels einer Lichtquelle erzeugt werden. Vorzugsweise handelt es sich bei dieser Lichtquelle um einen Laser, eine Diode, eine LED oder eine Superlumineszenz-Diode. Diese Wellenzüge können insbesondere vertikal und/oder horizontal polarisiert sein.

Bevorzugt ist es denkbar, dass eine elektromagnetische Welle durch einen polarisierenden Strahlteiler in den ersten und den zweiten Wellenzug geteilt wird und die beiden Wellenzüge gegenläufig durch eine Glasfaserschleife geleitet werden.

Darüber hinaus ist es denkbar, dass durch eine Veränderung des RF-Feldes innerhalb des Phasenmodulators eine Phase eines Wellenzugs oder beider Wellenzüge verändert werden.

Die Erfindung kann es vorsehen, dass sich durch die Überlagerung der beiden gegenläufigen Wellenzüge mit dem RF-Feld des Phasenmodulators der Brechungsindex für die Wellenzüge innerhalb des Phasenmodulators so ändert, dass sich die Phasen der Wellenzüge unterschiedlich verändern.

Vorzugsweise ist es denkbar, dass die Periode des RF-Feldes identisch ist mit der doppelten Zeit, die der zweite Wellenzug für seinen Weg durch den Phasenmodulator benötigt.

Weiter ist es vorzugsweise denkbar, dass die beiden Wellenzüge durch den Strahlteiler wieder zu einer elektromagnetischen Welle zusammengeführt werden. Die beiden Wellenzüge können dabei durch ein Interferometer geführt werden und dem Interferometer kann der Phasenmodulator zugeordnet sein, wobei der Phasenmodulator auf halber Weglänge der Wellenzüge durch das Interferometer angeordnet wird.

Ein spezielles Ausführungsbeispiel kann es vorsehen, dass die Glasfaserschleife durch den Phasenmodulator ersetzt wird. Außerdem ist es denkbar, dass mehrere Phasenmodulatoren eingesetzt werden.

Eine Vorrichtung zur Lösung der eingangs genannten Aufgabe wird durch die Merkmale des Anspruchs 11 beschrieben. Demnach ist es vorgesehen, dass die Vorrichtung zur Polarisationsmodulation von elektromagnetischen Wellen, insbesondere zur Erzeugung von Schlüsseln zur Quantenkryptographie, eine Glasfaserschleife aufweist, durch die zwei gegenläufige polarisierte elektromagnetische Wellen, nämlich ein erster Wellenzug und ein zweiter Wellenzug, führbar sind. Außerdem weist die Vorrichtung einen *running wave* Phasenmodulator bzw. eines Laufwellenphasenmodulators und einem Signalgenerator zur Erzeugung eines RF-Feldes auf, wobei das RF-Feld ko-propagierend zu einem der beiden Wellenzüge ausgerichtet ist.

Weiter ist es denkbar, dass mindestens ein polarisierender Strahlteiler eine elektromagnetische Welle in den ersten und den zweiten Wellenzug teilt, wobei die beiden Wellenzüge gegenläufig durch die polarisationserhaltende Glasfaserschleife geleitet wird.

Bevorzugt ist es vorgesehen, dass die Vorrichtung mindestens einen polarisierenden Strahlteiler aufweist, der die beiden Wellenzüge zu einer elektromagnetischen Welle zusammenführt.

Weiter ist es denkbar, dass der Phasenmodulator auf halber Weglänge der elektromagnetischen Welle durch die Glasfaserschleife angeordnet ist. Gleichermaßen ist es aber auch denkbar, dass der Phasenmodulator an einer anderen Position positioniert ist. Eine weitere Alternative kann es vorsehen, dass die Glasfaserschleife durch den Phasenmodulator ersetzt ist. Schließlich kann ein besonders bevorzugtes Ausführungsbeispiel vorsehen, dass die Vorrichtung mehrere Phasenmodulatoren aufweist, durch welche die elektromagnetischen Wellen führbar sind.

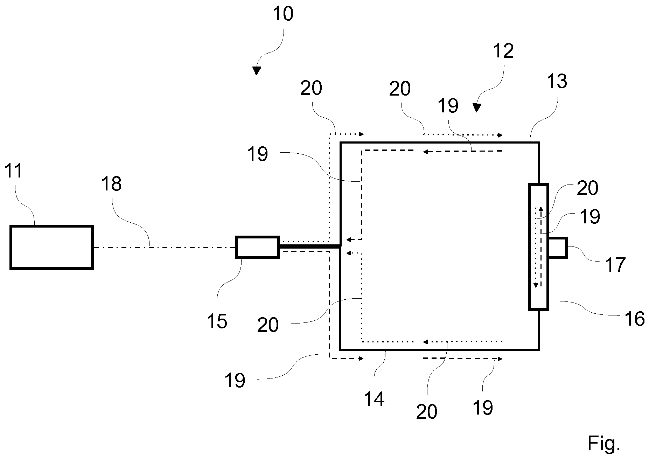

Ein bevorzugtes Ausführungsbeispiel der Erfindung wird nachfolgend anhand der einzigen Figur der Zeichnung näher beschrieben.

In der Figur wird stark schematisiert und lediglich auf die wesentlichsten Elemente reduziert ein mögliches Ausführungsbeispiel einer Vorrichtung 10 zur Polarisationsmodulation von elektromagnetischen Wellen für die oben beschriebene Anwendung dargestellt.

Die wesentlichen Bestandteile dieser Vorrichtung 10 sind in einer Lichtquelle 11, einem Interferonmeter 12, bestehend aus einem ersten Arm 13 und einem zweiten Arm 14, einem polarisierenden Strahlteiler 15 und einem Phasenmodulator 16 zu sehen. Das Interferometer 12 bzw. der erste Arm 13 und der zweite Arm 14 bilden eine symmetrische Schleife, an deren Ende der Strahlteiler 15 positioniert ist. Innerhalb dieser Schleife ist symmetrisch und zwar so, dass die beiden Arme 13, 14 gleich lang sind, der *running wave* Phasenmodulator 16 bzw. Laufwellenphasenmodulator angeordnet. Dieser Phasenmodulator 16 verfügt darüber hinaus über einen Signalgenerator 17, durch den ein RF-Feld generierbar ist.

In der Figur ist der Strahlengang bzw. sind die Strahlengänge gestrichelt bzw. gepunktet dargestellt. Diese Strahlengänge beschreiben den Weg, den ein durch die Lichtquelle 11 generierter Puls, oder auch eine Pulsgruppe oder ein kontinuierlicher Wellenzug elektromagnetischer Wellen durch die Vorrichtung 10 beschreibt.

Bei dieser Lichtquelle 11 kann es sich um einen Laser, eine Diode, eine LED oder eine Superlumineszenz-Diode oder dergleichen handeln. Der erzeugte polarisierte Wellenzug 18 wird zunächst durch den polarisierenden Strahlteiler 15 geleitet, um zwei Wellenzüge 19, 20 zu erzeugen. Ausgehend von dem Strahlteiler 15 propagieren diese zwei entgegengesetzt polarisierte Teilwellenzüge, nämlich der erste Wellenzug 19 und der zweite Wellenzug 20, in entgegengesetzte Richtungen durch die beiden Arme 13, 14 des Interferometers 12.

Die beiden Wellenzüge 19, 20 passieren, insbesondere gleichzeitig, aber entgegengesetzt, den *running wave* Phasenmodulator 16 bzw. den Laufwellenphasenmodulator und werden dabei durch das von dem Signalgenerator 17 erzeugte RF-Feld überlagert. Die Periode des RF-Feldes ist dabei identisch mit der doppelten Zeit, die der zweite Wellenzug 20 für seinen Weg durch den Phasenmodulator 16 benötigt. Durch die Überlagerung der verschiedenen elektromagnetischen Felder werden die beiden Wellenzüge 19, 20 relativ zueinander phasenmoduliert. In Abhängigkeit von dem RF-Feld lassen sich so verschiedene Modulationszustände durch den Signalgenerator 17 einstellen. Die Überlagerung der elektromagnetischen Felder bewirkt letztendlich, dass sich der Brechungsindex des optoelektronischen Mediums innerhalb des Phasenmodulators 16 verändert und zwar derart, dass er für die beiden gegenläufigen Wellenzüge 19, 20 unterschiedlich ist, was zu einer entsprechenden Phasenänderung beider Wellenzüge 19, 20 führt.

Nachdem die beiden Wellenzüge 19, 20 den Phasenmodulator 16 verlassen haben, laufen sie durch die beiden Arme 13, 14 des Interferonmeters 12 zurück zum Strahlteiler 15. Durch weitere nicht dargestellte Sensoren bzw. Detektoren lassen sich die einzelnen Wellenzüge bzw. deren Phasen für die oben beschriebenen Anwendungen auslesen.

Es sei ausdrücklich darauf hingewiesen, dass das hier dargestellte Ausführungsbeispiel nur eine von vielen Möglichkeiten darstellt, die beschriebene Erfindung umzusetzen. Gleichermaßen ist es denkbar, dass das Interferometer 12 mehrere Phasenmodulatoren 16 aufweist oder dass das Interferonmeter 12 komplett durch einen Phasenmodulator 16 ersetzt wird.

### Bezugszeichenliste:

- 10: Vorrichtung
- 11: Lichtquelle
- 12: Interferometer
- 13: erster Arm
- 14: zweiter Arm
- 15: Strahlteiler
- 16: Phasenmodulator
- 17: Signalgenerator
- 18: Wellenzug
- 19: erster Wellenzug
- 20: zweiter Wellenzug

## Patentansprüche

1. Verfahren zur Polarisationsmodulation von elektromagnetischen Wellen, insbesondere zur Erzeugung von Schlüsseln zur Quantenkryptographie, wobei zwei gegenläufige, polarisierte elektromagnetische Wellen, nämlich ein erster Wellenzug (19) und ein zweiter Wellenzug (20), durch mindestens ein zu einer der beiden elektromagnetischen Wellen ko-propagierendes RF-Feld eines *running wave* Phasenmodulators (16) bzw. eines Laufwellenphasenmodulators relativ zueinander phasenmoduliert werden.

2. Verfahren nach Anspruch 1, **dadurch gekennzeichnet, dass** die elektromagnetischen Wellen, insbesondere mehrere Pulse oder kontinuierliche Wellenzüge, mittels einer Lichtquelle (11), vorzugsweise eines Lasers, einer Diode, einer LED oder einer Superlumineszenz-Diode erzeugt und vorzugsweise vertikal und/oder horizontal, polarisiert werden.

3. Verfahren nach Anspruch 1 oder 2, **dadurch gekennzeichnet, dass** eine elektromagnetische Welle durch einen polarisierenden Strahlteiler (15) in den ersten und den zweiten Wellenzug (19, 20) geteilt wird und die beiden Wellenzüge (19, 20) gegenläufig durch eine Glasfaserschleife geleitet werden.

4. Verfahren nach einem der vorhergehenden Ansprüche, **dadurch gekennzeichnet, dass** durch eine Veränderung des RF-Feldes innerhalb des Phasenmodulators (16) eine Phase eines Wellenzugs oder beider Wellenzüge (19, 20) verändert werden.

5. Verfahren nach einem der vorhergehenden Ansprüche, **dadurch gekennzeichnet, dass** sich durch die Überlagerung der beiden gegenläufigen Wellenzüge (19, 20) mit dem RF-Feld des Phasenmodulators (16) der Brechungsindex für die Wellenzüge (19, 20) innerhalb des Phasenmodulators (16) so ändert, dass sich die Phasen der Wellenzüge (19, 20) unterschiedlich verändern.

6. Verfahren nach einem der vorhergehenden Ansprüche, **dadurch gekennzeichnet, dass** die Periode des RF-Feldes identisch ist mit der doppelten Zeit, die der zweite Wellenzug (20) für seinen Weg durch den Phasenmodulator (16) benötigt.

7. Verfahren nach Anspruch 3, **dadurch gekennzeichnet, dass** die beiden Wellenzüge (19, 20) durch den Strahlteiler (15) wieder zu einer elektromagnetischen Welle zusammengeführt werden.

8. Verfahren nach einem der vorhergehenden Ansprüche, **dadurch gekennzeichnet, dass** die beiden Wellenzüge (19, 20) durch ein Interferometer (12) geführt werden und dem Interferometer (12) der Phasenmodulator (16) zugeordnet ist, wobei der Phasenmodulator (16) auf halber Weglänge der Wellenzüge (19, 20) durch das Interferometer (12) angeordnet wird.

9. Verfahren nach Anspruch 8, **dadurch gekennzeichnet, dass** die Glasfaserschleife durch den Phasenmodulator (16) ersetzt wird.

10. Verfahren nach einem der vorhergehenden Ansprüche, **dadurch gekennzeichnet, dass** mehrere Phasenmodulatoren (16) eingesetzt werden.

11. Vorrichtung (10) zur Polarisationsmodulation von elektromagnetischen Wellen, insbesondere zur Erzeugung von Schlüsseln zur Quantenkryptographie mit einer Glasfaserschleife, durch die zwei gegenläufige polarisierte elektromagnetische Wellen, nämlich ein erster Wellenzug (19) und ein zweiter Wellenzug (20), führbar sind und mit einem *running wave* Phasenmodulator (16) bzw. einem Laufwellenphasenmodulator und einem Signalgenerator (17) zur Erzeugung eines RF-Feldes, das ko-propagierend zu einem der beiden Wellenzüge (19, 20) ausgerichtet ist.

12. Vorrichtung (10) nach Anspruch 11, **gekennzeichnet durch** mindestens einen polarisierenden Strahlteiler (15), der eine elektromagnetische Welle in den ersten und den zweiten Wellenzug (19, 20) teilt und die beiden Wellenzüge (19, 20) gegenläufig durch die polarisationserhaltende Glasfaserschleife leitet.

13. Vorrichtung (10) nach Anspruch 11 oder 12, **gekennzeichnet durch** mindestens einen polarisierenden Strahlteiler (15), der die beiden Wellenzüge (19, 20) wieder zu einer elektromagnetischen Welle zusammenführt.

14. Vorrichtung (10) nach einem der Ansprüche 11 bis 13, **dadurch gekennzeichnet, dass** der Phasenmodulator (16) auf halber Weglänge der elektromagnetischen Wellen durch die Glasfaserschleife angeordnet ist und/oder dass die Glasfaserschleife durch den Phasenmodulator (16) ersetzt ist.

15. Vorrichtung (10) nach einem der Ansprüche 11 bis 15, **gekennzeichnet durch** mehrere Phasenmodulatoren (16), durch welche die elektromagnetischen Wellen führbar sind.
